# EUROPEAN PATENT APPLICATION

(11) **EP 4 734 488 A1**
(43) Date of publication of application: **29.04.2026**
(21) Application number: 24208023.2
(22) Date of filing: 22.10.2024
(51) Int. Cl.: H04L 67/561, H04L 67/568, H04L 67/56, H04L 67/02

(54) **COMPUTER-IMPLEMENTED METHOD FOR A DISTRIBUTED COMPUTING ARCHITECTURE**

(71) Applicant: Technische Universität München, in Vertretung des Freistaats Bayern, 80333 München (DE)
(72) Inventor: SOSNOWSKI, Markus, 85748 Garching (DE); CARLE, Georg, 85748 Garching (DE); VON SECK, Richard, 85748 Garching (DE); WIEDNER, Florian, 85748 Garching (DE)
(74) Representative: Hoefer & Partner Patentanwälte mbB

(57) **Abstract**

The invention concerns a computer-implemented method carried out on a distributed computing architecture, the architecture comprising at least one proxy-server (2) and at least one origin-server (3) configured to host an application for clients (1) connected thereto, the method comprising: Receiving (S1) an application programming interface, API, endpoint request from a client (1) to a proxy-server (2); Forwarding (S2) the API endpoint request to an origin-server (3); From the origin-server (3), in dependence on the requested API endpoint, selectively outputting a response to the proxy-server (2) as: In a first case, CRDT-data (S3); and/or in a second case, non-CRDT-data (S4); wherein in at least the first case, especially in either case, the proxy-server (2) caches (S5) the response as a local replica.

## Description

The invention concerns a computer-implemented method carried out on a distributed computing architecture.

Distributed computing architectures with at least one proxy-server and at least one origin-server configured to host an application for clients connected thereto are known. These are commonly referred to as client-server applications, where the client provides a User Interface (Ul), and the server provides the main application logic. This is a common approach in enterprise applications typically divided into three primary layers: presentation, domain (the actual logic), and data source. The presentation layer usually involves a client-side Ul, the domain is handled by a backend server, and the data source by a database. The backend server is referred to as origin from the perspective of a Content Delivery Network (CDN). In some known applications, the interface from the presentation to the domain layer can be implemented with Web Application Programming Interfaces (APIs), which are dedicated endpoints for retrieving the application data. This approach has the benefit of allowing the backend server to offer a streamlined API that deals only with the domain logic. This streamlining allows multiple different clients, such as iOS, Android, and web to utilize the same API. However, communication with backend servers becomes a bottleneck if users frequently wait for server responses. Ultimately, the physical distance those API calls must traverse imposes a hard limit on application performance. One solution is to bring the server closer to the client through a distributed system. The HTTP caching feature of CDNs is a lightweight form of distribution, as certain requests can be handled directly by the CDN proxies. Nevertheless, a single backend server (or origin) remains responsible for the domain logic, which can still be a bottleneck. A fully distributed system runs the application close to the clients, enabling fast responses. However, such a system is complex to develop, and operating servers worldwide can be costly.

Web caching is a well-elaborated topic, and caching dynamic data presents a known challenge. The growing use of CDNs, the separation of network requests for static code and dynamic application data in software development, and the adoption of standardized API formats like Representational State Transfer (REST), JavaScript Object Notation (JSON), or JSON:API have changed how Web applications are built. Web caching is a proven strategy to improve latency, particularly for static data. While Web caching promises improved performance, applying it to dynamic data and REST APIs can be challenging. Current options mainly fall into two categories: caching based on a Time to Live (TTL) or active invalidation of content.

In situations where web application data from an API changes frequently, conventional TTL-based caching is unsuitable because it cannot fulfill the needed consistency requirements. Invalidation-based caching can meet these requirements to some extent, but its performance is not as good as a push-based approach and currently requires CDN-specific logic. Most importantly, current Web caching strategies can only speed up read requests because neither approach allows a CDN to independently make changes to the data. This is especially problematic in scenarios with a high volume of data changes, where current web caching strategies fall back the general potential of Web caching.

It is an object of the present invention to provide a computer-implemented method carried out on a distributed computing architecture with at least one proxy-server and at least one origin-server configured to host an application for clients connected thereto, wherein the method allows the origin-server to keep a cache state of a distributed network's (the at least one proxy-server) web proxies consistent and enabling them to directly apply mutations to the data. The invention's method significantly enhances Web API performance in scenarios where it is vital to provide up-to-date information. Simultaneously, the invention provides developers with a new option that combines the simplicity of caching with the power of a fully distributed system seamlessly integrating into existing applications.

The solution of this object is solved by the features of the independent claim. The dependent claims contain advantageous embodiments of the present invention.

The solution of this object is solved in particular by the features of the computer-implemented method of independent claim 1. The method is carried out on a distributed computing architecture, the architecture comprising at least one proxy-server and at least one origin-server configured to host an application for clients connected thereto. The proxy-server(s) is/are preferably provided by a Content Delivery Network (CDN). The method comprises the following:
- Receiving an application programming interface (API) endpoint request from a client to a proxy-server;
- Forwarding the API endpoint request to an origin-server;
- From the origin-server, in dependence on the requested API endpoint, selectively outputting a response to the proxy-server as:
   ∘ In a first case, Conflict-free Replicated Data Type (CRDT)-data; and/or
   ∘ In a second case, non-CRDT-data;
- wherein at least in the first case, especially in either case, the proxy-server caches the response as a local replica.

CRDTs are used in distributed computing to achieve eventual consistency. Unlike consensus protocols that rely on complex coordination, CRDTs achieve consistency by defining the data type. Each peer (client and/or proxy-server and/or origin) can modify a CRDT without coordinating with other peers. This might result in different peers having different states, but the logic of the CRDT ensures consistency when all changes have propagated to all peers. There are generally two types of CRDTs: state-based and operation-based. State-based CRDTs synchronize by merging the states of two peers, while operation-based CRDTs synchronize only the operations on the data. Successful synchronization between peers only requires a reliable communication, so changes eventually arrive at each peer.

In other words, in the present method, the origin-server is programmed, for instance via application logic, to decide, based on the specific requested API endpoint, whether the response is to be based on CRDT (first case) or non-CRDT (second case). The origin-server outputs the corresponding response. Thereby, API endpoints for which CRDT are suitable can be output to the proxy-server (first case), or in unsuitable cases, non-CRDT data can be output to the proxy-server (second case). Both responses, also referred to as data states, are then cached in the proxy-server. For the first case(s), the cached data is in the form of CRDT, which provides conflict-free caching.

Preferably, in the second case, the proxy-server also caches the response as a local replica. On the other hand, in some examples, the origin can instruct the proxy-server, for example via a header in HTTP, not to cache the response. In such cases, the proxy-server can compute the response and forward it to the client, possibly without employing caching.

The present method allows the origin (the server hosting the main application logic) to keep the cache state of a CDN's Web proxies consistent and enables the proxy-server(s) to directly apply mutations to the data. This significantly enhances Web API performance in scenarios where it is vital to provide up-to-date information.

Preferably, the present method outputs at least one response according to the first case. Therein, preferably, at least one API endpoint of the application logic on the origin-server is programmed to communicate using CRDT.

In preferable embodiments, the non-CRDT-data is any one or more of text data, photo data, audio data, HTML, JavaScript code, and serialized data objects. In particular, it is preferable that the non-CRDT-data is the serialized data object in JavaScript Object Notation (JSON) format (also referred to as a JSON object). This has the advantage in that the present method can be applied to a wide range of applications, especially pre-existing applications, to cache data therefrom and directly apply mutations to that data without conflicts.

Preferably, the origin-server is programmed to contain application logic defining a correspondence between API endpoints and the first case or the second case. Therein, preferably, the application logic assigns each endpoint to the first case or the second case. In some examples, a single API endpoint is preferably assigned to the first case and the second case, i.e. can be responded to with CRDT-data or non-CRDT-data. In such cases, preferably, the application logic defines a further correspondence between the first case or the second case and requirements of the proxy-server, for example if the proxy-server is programmed to or configured to handle CRDT-data, for example based on memory and/or computing requirements. Thereby, the present method can be applied to a wide range of applications and, especially existing, architectures.

Further preferably, during the forwarding to the origin-server, the proxy-server modifies the request to indicate whether the first case (CRDT-data response) is possible. Therein, the proxy-server preferably annotates the response with one or more tokens, for example by placing the one or more tokens in an appended HTTP header or otherwise. The annotation can preferably be omitted if it is otherwise clear that the first case is (always) possible. Thereby, for instance, the origin-server preferably only selectively responds with CRDT-data if the proxy-server indicates this possibility beforehand.

Further preferably, during the outputting of the response, the origin-server selectively modifies the response to indicate whether the first case or the second case is selected, especially by sending a status code indicating either case or annotating the response with a token, e.g., by placing it in an HTTP-header, including it inside the message body of the response, and/or otherwise. Preferably, the status code is 101 switching protocols.

It should be noted that the foregoing indications are not limited to HTTP. In addition or alternatively thereto, a different protocol with similar properties is employed. In this regard, preferably the only constraints are that read and write requests can be differentiated by the proxy-server, that API endpoints are unambiguously identifiable, and that meta data can be exchanged.

Advantageously, the API endpoint request is configured to access a Representational State Transfer, also referred to as REST, API endpoint. REST covers several principles and constraints for APIs, including statelessness, cacheability, a uniform interface, and support for multi-layered systems, such as in the present distributed computing architecture.

Preferably, the client's API endpoint request is for a serialized data object, especially a JSON object. Thereby, the present method can be applied to a wide range of applications and, especially existing, architectures.

In preferable embodiments, the proxy-server forwards the API endpoint request to the origin-server according to standard proxy rules, especially according to HTTP proxy rules. Thereby, the present method can be applied to a wide range of applications and, especially existing, architectures.

Preferably, in the second case of responding with non-CRDT-data, the origin-server responds with the non-CRDT-data, especially with a JSON object, via an HTTP response. Thereby, the present method can be applied to a wide range of applications and, especially existing, architectures.

Preferably, the proxy-server caches the non-CRDT-data (second case) response as a shared HTTP cache. Thereby, the second case(s) are cached according to standard proxy rules, and therefore the present method is applicable to a wide range of applications and architectures.

In some preferable embodiments, in the first case of responding with CRDT-data, the origin-server further outputs instructions and/or permissions for accessing the CRDT-data, especially the cached CRDT-data. The instructions and/or permissions especially include required user authentication and/or endpoint access-control and/or CRDT mutability. Therein, CRDT mutability refers preferably to the number and/or types of operations which can be carried out on the CRDT data by a proxy-server without prior coordination with the origin. Thereby, conflict-free manipulation of the proxy-server cache is further advantageously secured, i.e. conflicts are reduced. It should be noted that the origin can carry out operations on the CRDT data stored therein as well, for instance for pushing updates.

The proxy-server caches information on whether the origin selected the first or second case and, if the origin selected the first case, also caches the instructions and/or permissions received from the origin for each API endpoint. It should be noted that an API endpoint a client accesses is identified by several information provided in the request. In case of HTTP, an API endpoint is identified by any one or more of the accessed Uniform Resource Identifier (URI), the HTTP method (e.g., GET or POST), and selected HTTP headers. For instance, the request for "GET /api" and "POST /api" are treated by the proxy-servers as separate API endpoints and both are forwarded separately to the origin. However, the instructions and/or permissions returned by the origin can indicate the same CRDT so that the proxy-server uses the same local replica for both API endpoints. Further preferably, the instructions and/or permissions for an API endpoint include information about additional API endpoints for which the proxy-server should use the same CRDT-data (e.g., the instructions outputted for the "GET /api" request reveal that the proxy-server can also apply a "POST /api" request to the CRDT-data send in the GET request).

Preferably, following reception of the CRDT-data by the proxy-server in the first case, the proxy-server initializes its cached local replica of the CRDT-data and established synchronization with the origin-server. In particular, the initialization and synchronization establishing of the cached local replica of CRDT-data is carried out without additional "round-trip" or communication with the origin-server.

Preferably, the cached local replica in the first case and/or the second case (i.e. CRDT-data or non-CRDT-data in local cache of proxy-server) is continuously synchronized with the origin-server. In particular, the cached local replica is preferably continuously synchronized in a background thread with the origin-server. However, the synchronization is not principally limited to a thread, and can for example also be handled as an asynchronously running operation in the event loop of a NodeJS (Javascript Server) environment.

Further advantageously, the method further comprises, in either case, outputting to the client by the proxy-server a current state in reaction to the API request, especially as a JSON object. In other words, preferably, the proxy-server outputs to the client, irrespective of CRDT-data or non-CRDT-data between the proxy-server and the origin-server, the current state for example as a JSON object, especially if the client's API endpoint request is for a JSON object. Thereby, preferably no adaptations to the client are necessary, and the method can be applied to a wide range of applications and architectures.

Preferably, the method further comprises additionally receiving the API endpoint request by the client, for example an additional same endpoint request (repeated request), and, if the API endpoint request is a read request such as GET, responding to the API endpoint request, directly by the proxy-server, with a current state of the local replica of the CRDT-data of the first case. In other words, preferably, upon an additional (same) endpoint request, the proxy-server can respond to the request directly using its local replica of the CRDT-data. Preferably, since the local replica is synchronized separately with the origin-server, the client's request is quickly and efficiently answered without necessitating a further "roundtrip" to the origin-server in reaction to that request. Due to the nature of CRDT-data, this response is conflict-free.

Preferably, the method further comprises an additional receiving of the API endpoint request by the client, for example an additional same endpoint request (repeated request), and, if the API endpoint request is a write or a mutation request such as POST, carrying out the API endpoint request on the local replica. Preferably, since the local replica is synchronized separately with the origin-server, the client's request is quickly and efficiently carried out on the local replica (cache of proxy-server) without necessitating a further "roundtrip" to the origin-server in reaction to that request. Due to the nature of CRDT-data, this operation is conflict-free.

Further preferably, the method comprises responding to the API endpoint request, directly by the proxy-server to the client, with a confirmation of successful operation of the API endpoint request. In other words, since the CRDT local replica is conflict-free, the proxy-server can carry out the client's requested mutation/write on the local replica and immediately confirm said operation, without necessitating a further "roundtrip" to the origin-server to confirm that operation.

Furthermore, the method preferably further comprises synchronizing the operation, for instance POST, of the API endpoint request, especially the current state after the operation, with the origin-server. Preferably, this synchronization is carried out logically and timely separately from carrying out the operation on the local replica. Thereby, the proxy-server can confirm the operation immediately with the client, and at a preferably later time synchronize the operation with the origin-server. Furthermore, this synchronization is not limited to "a later time", but can also be carried out by essentially storing a plurality of endpoint requests or sequentially carrying out their corresponding operations, and after a predetermined number of requests synchronizing with the origin-server. Thereby, redundant or unnecessary "roundtrips" to the origin-server are advantageously avoidable, thereby increasing the speed and efficiency of the present method.

Preferably, the data embedded in the CRDT is structured according to a well-defined format, such as JSON:API, in case the origin gave the proxy-server permission to apply mutations to its local CRDT replica, i.e. in the preferable case that the CRDT is mutable. The well-defined format defines how objects, attributes, relations, and collections of objects and relations are defined. Additionally, it defines how reading (such as GET) and mutating (such as POST and DELETE) client-requests are formatted. The well-defined format is preferably either pre-agreed on or the origin includes the format in the initial instructions and permissions to access the CRDT. Preferably, the architecture comprises a plurality of proxy-servers and one or more origin-servers, especially a plurality of origin-servers. Therein, preferably, each of the proxy-servers comprises their own local replica of the CRDT-data and non-CRDT-data, and each of the origin-servers comprises their own or replications of the application logic. For instance, the architecture comprises 250+ proxy-servers with for example an origin-server on each continent.

The present invention also concerns a computer architecture configured to and/or programmed to carry out the method according to any one of the foregoing explained advantageous examples.

Further details, advantages, and features of preferred embodiments of the present invention are described in detail with reference to the figures.

Therein,
Fig. 1 shows a schematic sequence diagram of a computer-implemented method according to a first embodiment of the present invention; and
Fig. 2 shows a schematic diagram depicting a distributed computing architecture and communication therein according to the computer-implemented method of the first embodiment of the present invention.

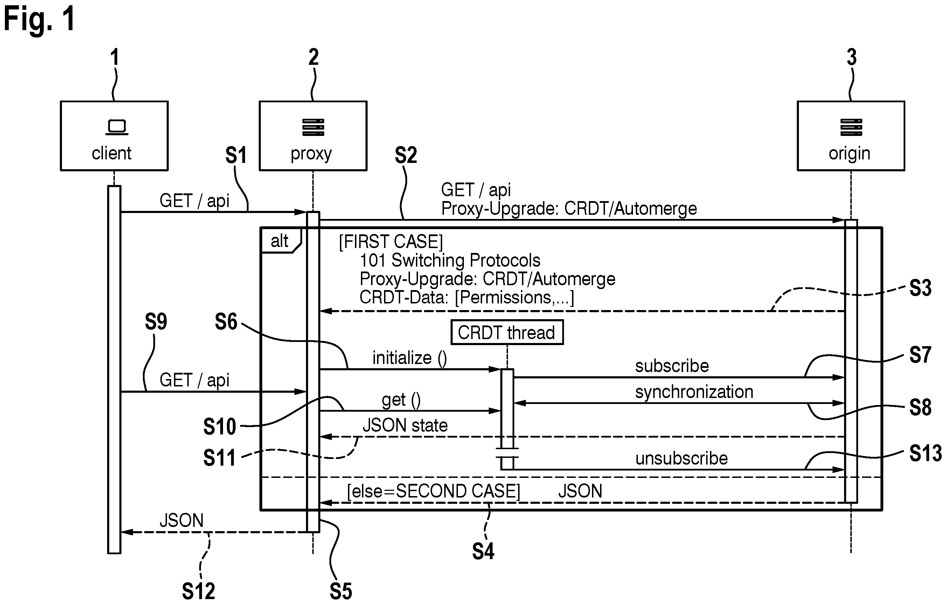

Fig. 1 shows a schematic sequence diagram of a computer-implemented method according to a first embodiment of the present invention. In particular, Fig. 1 shows a client 1, a proxy-server 2, and an origin-server 3 along with a communication protocol therebetween explaining the present method.

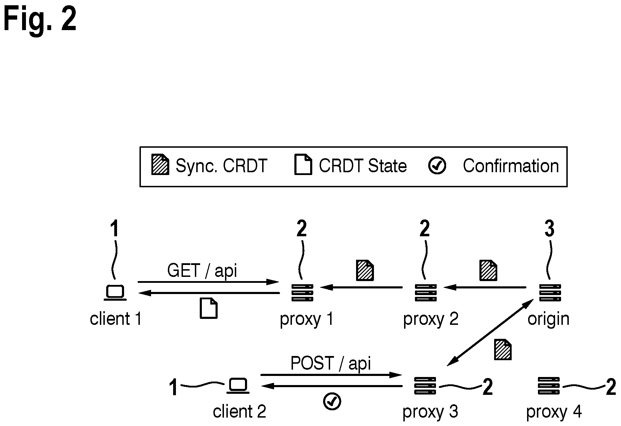

The client 1, the proxy-server 2, and the origin-server 3 are components of a distributed computing architecture, and the present method is carried out on this architecture. For ease of explanation, only one of each client 1, proxy-server 2, and origin-server 3 are shown. The architecture, as exemplified further in Fig. 2, is however not limited thereto, and can comprise a plurality of or many proxy-servers 2 and one or more origin-servers 3.

The method comprises the following:
- S1: Receiving an application programming interface (API) endpoint request from a client 1 to a proxy-server 2;
- S2: Forwarding the API endpoint request to an origin-server 3;
- From the origin-server 3, in dependence on the requested API endpoint, selectively outputting a response to the proxy-server 2 as:
   ∘ S3: In a first case, Conflict-free Replicated Data Type (CRDT)-data; and/or
   ∘ S4: In a second case, non-CRDT-data;
- S5: wherein at least in the first case, especially in either case, the proxy-server 2 caches the response as a local replica.

Herein, with reference to the diagram of Fig. 1, the first and second case are described with the "alt" frame distinguishing two alternatives in the sequence diagram separated by the horizontal dashed line. The first alternative corresponds to the first case of the origin returning CRDT-data marked with "[FIRST CASE]" and the second alternative corresponds to the origin returning non-CRDT-data marked with "[else=SECOND CASE]".

Now, an explanation of the method will be given.

In a first step S1, the client 1 sends an API endpoint request, in this case GET, to the proxy-server 2. Then, in a second step S2, the proxy-server forwards the API endpoint request GET to the origin-server 3. Instead of a GET request, the client could send any other HTTP method like POST, PUT, or DELETE. In the present embodiment, the proxy-server modifies and appends a "Proxy-Upgrade" HTTP header (similar to the HTTP Upgrade header) to the request to indicate its support for CRDT-data. Additionally, in the present example, the value of the "Proxy-Upgrade" header informs the origin about the concrete CRDT library (in this case "Automerge") it supports for replicating the CRDT-data.

According to its application logic defining a correspondence between API endpoints, in this case "GET /api" pertaining to a specific API endpoint, the origin-server 3 in a third step S3 outputs in response to the proxy-server 2 CRDT-data (first case). In the present embodiment, the origin-server 3 further outputs an HTTP status code 101 switching protocols, a "Proxy-Upgrade" HTTP header, and appending instructions and permissions for accessing the CRDT-data such as required user authentication and/or endpoint access-control and/or CRDT mutability. The "Proxy-Upgrade" contains the response to the respective header in the request, informing the proxy-server that the first case (CRDT-data) is used and confirming the used library to the proxy-server. In some applications, the 101 switching protocols status code is realized with an alternative status code and/or with a token embedded in the response, e.g., in an HTTP header. In some applications, the proxy-server proposes multiple CRDT libraries and/or CRDT-library versions and/or general protocol variants (e.g., alternatives in the instructions and/or permissions) to the origin, so that the origin can respond with a concrete configuration from the proposed options, effectively allowing origin and proxy-server to agree on a mutual configuration.

If the origin-server 3 selects, based on its application logic, not (i.e., else=second case) to output CRDT-data, it outputs non-CRDT-data in a fourth step S4. In the present embodiment, the origin-server 3 outputs a JSON object to the proxy-server 2.

In presently both cases, the proxy-server 2 caches the response as a local replica in a fifth step S5. In the presently shown embodiment, the client's 1 API endpoint request is for a JSON object, such that in any of the first case and the second case, a JSON object is returned to the client 1 as a current state in a twelfth step S12. However, it should be noted that, in some examples, the origin can instruct the proxy-server, for example via a header in HTTP, not to cache the response according to the second case. In such cases, the proxy-server can compute the response and forward it to the client, possibly without employing caching.

With regard to the first case, following reception of the CRDT-data by the proxy-server 2 in the third step S3, the proxy-server 2 initializes its cached local replica of the CRDT-data ("CRDT thread") in a sixth step S6 and established synchronization S8 via subscription S7 with the origin-server 3. The synchronization may be unsubscribed in a thirteenth step S13, for example if a predetermined time as lapsed without the endpoint being requested. Furthermore, it should be noted that also the second case, that is in the present embodiment the JSON object of the fourth step S4, can be synchronized via subscription to the origin-server 3.

The method further comprises another additional receiving of the API endpoint request by the client 1, in this case another GET /api request in a ninth step S9. In a tenth step S10, in reaction to the request GET /api, the proxy-server 2 requests ("get()") the current state stored as a local replica in a tenth step S10, and retrieves the current state as a JSON state in an eleventh step S11, which is then output in the twelfth step as the JSON state.

If the API endpoint request by the client 1 is a mutation, write, or manipulation request such as POST in the first or ninth step (S1 or S9), the proxy-server 2 behaves initially according to the shown GET case but instead of reading the state of the CRDT, performs the operation in the tenth step S10 (instead of "get()"), and outputs, instead of the JSON state in the eleventh step S11, a confirmation of carrying out the operation. This operation can then be synchronized S8 with the origin-server 3. In the case of carrying out such an operation on the cached CRDT-data in the proxy-server 2, this data is not deleted before being synchronized S8 with the origin-server 3 so as to retain consistency.

During synchronization S8, the current state of the local replica is continuously updated on the origin-server 3 side. Due to the use of CRDT-data, the proxy-server 2 can retrieve S10, S11 the current state from the local replica (cached data) without necessitating an additional "roundtrip" to the origin-server 3. Furthermore, due to the use of CRDTs, the present method is not limited to read requests such as GET /api, but can also be employed for manipulation requests such as POST, as will be elucidated with respect to Fig. 2 in the following.

As demonstrated in Fig. 2, a proxy-server 2 is not necessarily connected directly between a client 1 and an origin-server 3. Instead, multiple proxy-servers 2 may be daisy-chained between a client 1 and an origin-server 3, as shown in the top vertical column of Fig. 2 (client, proxy, proxy, origin). In the bottom column, a third proxy-server 2 (proxy 3) is directly connected between a second client 1 (client 2) and the origin-server 3 (origin).

In the top column, a schematic communication protocol of the foregoing described case for an endpoint request concerning GET /api is shown. As shown therein, the proxy-servers 2 ("proxy 1") directly communicates with the client 1 and fulfills the request GET /api based on the CRDT-data of its local replica. This is shown in Fig. 2 via the white file-symbol pertaining to "CRDT state". This local replica is not necessarily synchronized with the origin-server 3, as the synchronization (step S8 in Fig. 1 above) is carried out independently, for example in a background thread. This non-synchronized CRDT state which the client 1 receives can be synchronized by pushing the synchronized local replica of the proxy-server 2 (proxy 1) to the client 1, or waiting for another endpoint request by the client 1.

Now, with respect to the bottom column of Fig. 2, an endpoint request concerning a manipulation or write request, in this example POST /api, will be discussed. When the client 1 (client 2) sends the endpoint request POST /api, and this endpoint request has already been stored as a local replica (i.e. steps S1, S2, S3, and S5 have been carried out for this endpoint), the proxy-server 2 (proxy 3) carries out the POST request on its local replica of CRDT state. Furthermore, since the data is conflict-free, the proxy-server 2 immediately confirms the manipulation or mutation of the CRDT of its local replica, indicated by a checkmark in Fig. 2. At a later time (or coincidentally simultaneously) or upon gathering a predetermined number of such manipulation requests, the proxy-server 2 updates the current state of the origin via synchronization with the origin-server 3.

Therefore, the manipulation or write request POST /api can be carried out on the local replica of the proxy-server 2, without necessitating a redundant synchronization ("roundtrip") with the origin-server 3. Since CRDTs are used, a plurality of manipulation or write requests can be simultaneously synchronized between the origin-server 3 and the local replica on the proxy-server 2, without conflict. Thus, the proxy-server 2 can immediately confirm the manipulation request carried out on its local replica.

An additional proxy-server 2 (proxy 4) is shown which is not synchronized with the origin-server 3, for example via unsubscription in step S13 of Fig. 1.

In addition to the foregoing written description of the present invention, it is herewith explicitly referred to the graphic description of the present invention shown in the figures.

### List of reference symbols

- 1: client
- 2: proxy-server
- 3: origin

## Claims

1. Computer-implemented method carried out on a distributed computing architecture, the architecture comprising at least one proxy-server (2) and at least one origin-server (3) configured to host an application for clients (1) connected thereto, the method comprising:
• Receiving (S1) an application programming interface, API, endpoint request from a client (1) to a proxy-server (2);
• Forwarding (S2) the API endpoint request to an origin-server (3);
• From the origin-server (3), in dependence on the requested API endpoint, selectively outputting a response to the proxy-server (2) as:
∘ In a first case, CRDT-data (S3); and/or
∘ in a second case, non-CRDT-data (S4);
• wherein at least in the first case, especially in either case, the proxy-server (2) caches (S5) the response as a local replica.

2. Computer-implemented method according to claim 1, wherein the non-CRDT-data is any one or more of text data, photo data, audio data, HTML, JavaScript code, and serialized data objects.

3. Computer-implemented method according to any one of the foregoing claims, wherein the origin-server (3) is programmed to contain application logic defining a correspondence between API endpoints and the first case (S3) and/or the second case (S4).

4. Computer-implemented method according to claim 3, wherein, during the forwarding (S2) to the origin-server (3), the proxy-server (2) modifies the request to indicate whether the first case (S3) is possible, especially by annotating the request with one or more tokens, especially by placing the one or more tokens in an appended HTTP header.

5. Computer-implemented method according to claim 3 or claim 4, wherein, during the outputting (S3, S4) of the response, the origin-server (3) selectively modifies the response to indicate whether the first case (S3) or the second case (S4) is selected, especially by sending a status code such as 101 Switching Protocols and/or annotating the response with one or more tokens, especially by placing the one or more tokens in an appended HTTP header.

6. Computer-implemented method according to any one of the foregoing claims, wherein the API endpoint request is configured to access a Representational State Transfer, REST, API endpoint.

7. Computer-implemented method according to any one of the foregoing claims, wherein the client's (1) API endpoint request is for a serialized data object, especially a JSON object.

8. Computer-implemented method according to any one of the foregoing claims, wherein in the first case (S3), the origin-server (3) further outputs instructions and/or permissions for accessing the CRDT-data such as required user authentication and/or endpoint access-control and/or CRDT mutability.

9. Computer-implemented method according to claim 8, wherein, following reception of the CRDT-data by the proxy-server (2) in the first case (S3), the proxy-server (2) initializes its cached local replica of the CRDT-data (S6) and establishes synchronization (S7, S8) with the origin-server (3).

10. Computer-implemented method according to any one of the foregoing claims, wherein the cached local replica in the first case (S3) and/or the second case (S4) is continuously synchronized with the origin-server (3).

11. Computer-implemented method according to any one of the foregoing claims, further comprising, in either case (S3, S4), outputting (S12) to the client (1) by the proxy-server (2) a current state in reaction to the API request as a serialized data object, especially as a JSON object.

12. Computer-implemented method according to any one of the foregoing claims, further comprising further additional receiving (S9) of the API endpoint request by the client (1), and, if the API endpoint request is a read request such as GET, responding (S11) to the API endpoint request, directly by the proxy-server (2), with a current state of the local replica of the CRDT-data of the first case (S3).

13. Computer-implemented method according to any one of the foregoing claims, further comprising further additional receiving (S9) of the API endpoint request by the client (1), and, if the API endpoint request is a write or a mutation request such as POST, carrying out the API endpoint request on the local replica.

14. Computer-implemented method according to claim 13, further comprising responding to the API endpoint request (S9), directly by the proxy-server (2) to the client (1), with a confirmation of successful operation of the API endpoint request (S9).

15. Computer-implemented method according to claim 14 with claim 10, further comprising synchronizing (S8) the operation of the API endpoint request, especially the current state after the operation, with the origin-server (3).
